# NEUE EUROPÄISCHE PATENTSCHRIFT

(11) **EP 0 321 461 B2**
(45) Veröffentlichungstag und Bekanntmachung des Hinweises auf die Entscheidung über den Einspruch: **08.02.1995**
(45) Hinweis auf die Patenterteilung: 06.02.1991
(21) Anmeldenummer: 87904382.6
(22) Anmeldetag: 10.07.1987
(51) Int. Cl.: B29C 45/17

(54) **SPRITZGIESSANLAGE**
INJECTION MOLDING PLANT
INSTALLATION DE MOULAGE PAR INJECTION

(30) Priorität: 30.10.1986 DE 3636949
(43) Veröffentlichungstag der Anmeldung: 28.06.1989
(73) Patentinhaber: MANNESMANN Aktiengesellschaft, 40027 Düsseldorf (DE)
(72) Erfinder: SCHREINER, Helmut, D-8500 Nürnberg (DE)
(74) Vertreter: LOUIS, PÖHLAU, LOHRENTZ & SEGETH
(86) Internationale Anmeldenummer: DE8700308
(87) Internationale Veröffentlichungsnummer: WO8803082

(56) Entgegenhaltungen:
- EP-A- 0 164 062
- EP-A- 0 183 944
- DE-A- 2 847 418
- DE-A- 3 328 290
- DE-A- 3 617 094
- DE-A- 3 644 915
- DE-C- 3 508 867
- Kunstoffberater, Band 27, nr 10, Oktober 1982, (Frankfurt/Main, DE), R. Rathgeb : "Rationalisieren - Automatisieren. Wege zur wirtschaftlicheren Spritzgussfertigung", Seiten 21-25
- Kunstoffberater, Band 30, nr.6, Juni 1985, (München,DE),"Ein zukunftsorientiertes Werkzeugschnellwechselsystem", Seiten 20-21
- Broschüre der Firma ARBURG, vor der Kuststoffmesse K 86 verteilt

## Beschreibung

Die Erfindung betrifft eine Spritzgießanlage mit den Merkmalen gemäß dem Oberbegriff des Patentanspruches 1.

Im Zuge der Rationalisierung ist es von zunehmender Bedeutung, den Betrieb von Spritzgießmaschinen zu automatisieren. Dies gilt vor allem auch für den Wechsel der Gießwerkzeuge beim Umrüsten, da dieser insbesondere bei grossen und daher sehr schweren Werkzeugen enorm zeitaufwendig ist, sowie auch für den Abtransport der von der Spritzgießmaschine produzierten Spritzgießteile. Bei einer bekannten Spritzgießanlage der vorstehend angegebenen Art (vgl. z.B. DE-OS 35 01 000) sind hierzu Transportvorrichtungen zur Beförderung des Gießwerkzeuges sowie zum Wegfördern der die Spritzgießteile aufnehmenden Teilebehälter vorgesehen. Die Transportvorrichtung zur Beförderung des Gießwerkzeuges ist ein ferngesteuerter, längs Schienen oder einer Induktionsschleife verfahrbarer Wagen, der zwei Plätze für Gießwerkzeuge aufweist und gesteuert an eine genau definierte Position an der Gießmaschine verfahren werden kann, so daß durch die in den Wagen integrierte Übergabevorrichtung das in der Spritzgießmaschine befindliche Gießwerkzeug auf den Wagen aufgenommen und das von diesem-beispielsweise von einer Vorwärmstation her-herangeförderte neue Gießwerkzeug in die Spritzgießmaschine eingebracht werden kann. Auf der Bedienungsgegenseite der Spritzgießmaschine ist eine Transportvorrichtung, beispielsweise eine Rollenbahn, angeordnet, auf der Teilebehälter zur Aufnahme der fertigen Spritzgießteile zu- und weggefördert werden. Die Teilebehälter werden durch ein Handlinggerät oder einen Manipulator an der Spritzgießmaschine beschickt, der nach jedem Spritzzyklus das oder die Spritzgießteile aus der Formhöhlung entnimmt und in den auf der Transportvorrichtung gerade bereitstehenden Teilbehälter ablegt.

Nachteilig an diesen bekannten Spritzgießanlagen ist, daß der technische Aufwand für die erwähnten Transportvorrichtungen, insbesondere für diejenigen zur Beförderung der Gießwerkzeuge, und folglich deren Preis außerordentlich hoch ist. Das betrifft sowohl den Aufbau des die Gießwerkzeuge befördernden Wagens als auch den steuerungstechnischen Aufwand, weil der Wagen zur Herausnahme des nicht mehr benötigten Gießwerkzeuges aus der Spritzgießmaschine und zum Einbringen des neuen Gießwerkzeuges entweder gesteuert in eine entsprechende andere Position verfahren oder die auf dem Wagen vorgesehene drehbare Plattform um 180° gewendet werden muß und weil in der Regel auch ein Umsetzen der Gießwerkzeuge von dem Wagen auf Gabelstapler oder mittels Kran beim Verbringen der Gießwerkzeuge vom und zum Werkzeuglager erforderlich ist. Darüber hinaus beschränkt die Anordnung von Schienen oder der genannten Induktionsschleife, längs denen der Wagen an die Spritzgießmaschine herangeführt wird, die Anbringung und den Einsatz von Peripheriegeräten an der Spritzgießmaschine.

Aufgabe der Erfindung ist es, eine Spritzgießanlage der eingangs genannten Art, insbesondere die Anordnung der erwähnten Transportvorrichtungen, dahingehend zu verbessern, daß der konstruktive und steuerungstechnische Aufwand dafür erheblich verringert und der an der Spritzgießmaschine zur Verfügung stehende Raum vergrössert wird.

Erfindungsgemäß wird diese Aufgabe gelöst durch die Merkmale gemäß dem Kennzeichen des Patentanspruches 1.

Der Erfindung liegt zunächst die Erkenntnis zugrunde, daß es prinzipiell möglich ist, die Transportvorrichtungen für die Gießwerkzeuge und für die Teilebehälter so auszugestalten, daß sie für beide Funktionen geeignet sind, und dann anstelle zweier getrennter Transportvorrichtungen nur eine einzige davon vorzusehen, die zweckmässigerweise auf der Bedienungsgegenseite der Spritzgießmaschine angeordnet ist. Hierdurch ist bereits eine beträchtliche Einsparung sowohl an konstruktivem Aufwand als auch an Platzbedarf erzielbar. Weiterhin beruht die Erfindung auf der Überlegung, daß durch eine-an sich bereits bekannt-Anordnung der Übergabevorrichtung für die Gießwerkzeuge an der Spritzgießmaschine selbst der damit zunächst entstehende grössere Aufwand durch die daraus resultierende Möglichkeit bei weitem überkompensiert wird, daß die Transportvorrichtung sehr viel einfacher ausgestaltet und z.B. aus handelsüblichen Bauteilen erstellt werden kann. Zur Halterung des Gießwerkzeuges ist eine Kassette vorgesehen, deren Form und Abmessungen mit denjenigen des Teilebehälters für die fertigen Spritzgießteile übereinstimmen. Die Transportvorrichtung ist somit als Transportgerät für diese Kassetten und die Teilebehälter in gleicher Weise verwendbar und hat reine Förderfunktion.

Die Transportvorrichtung ist ein Stetigförderer, z.B. eine angetriebene Rollenbahn oder ein Gurtförderer, da solche Förderanlagen als standardisierte förderteschnische Komponenten im Handel erhältlich sind. So gibt es beispielsweise diese Art von Förderern bereits abgestimmt auf die Maße der sogenannten Europaletten, die zum Versand auch der fertigen Spritzgießteile eingesetzt werden. Durch entsprechende Abstimmung der erwähnten Kassette zur Aufnahme der Gießwerkzeuge können diese Stetigförderer daher sowohl die Europaletten bzw. die davon gehaltenen Teilebehälter als auch die Kassetten mit den Gießwerkzeugen fördern.

Ein weiterer bedeutsamer Vorteil, der mit dem Einsatz der Stetigförderer einhergeht, liegt darin, daß sowohl die Teilebehälter als auch die Kassetten für die Gießwerkzeuge an beliebiger Stelle des Förderers aufgesetzt werden können, sofern die zur Positionierung des Gießwerkzeuges an der Spritzgießmaschine erforderlichen Elemente an der Kassette angeordnet sind und über diese die Antriebssteuerung des Stetigförderers beeinflusst wird. Das vereinfacht die Übergabe der Gießwerkzeuge mittels Kran, Gabelstapler od dgl., wenn diese beispielsweise aus dem Werkzeugspeicher geholt werden, auf die Transportvorrichtung erheblich, weil in Förderlängsrichtung ein präzises Aufsetzen nicht notwendig ist und infolge der Abstimmung der Förderer-Querabmessungen auf die Kassettenabmessungen die exakte Lage durch den Förderer selbst bestimmt wird.

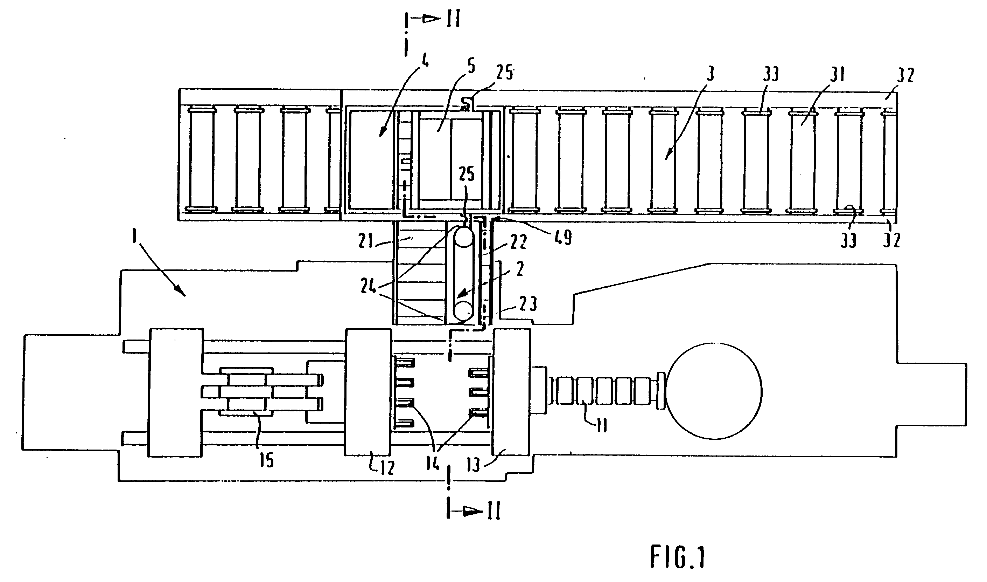

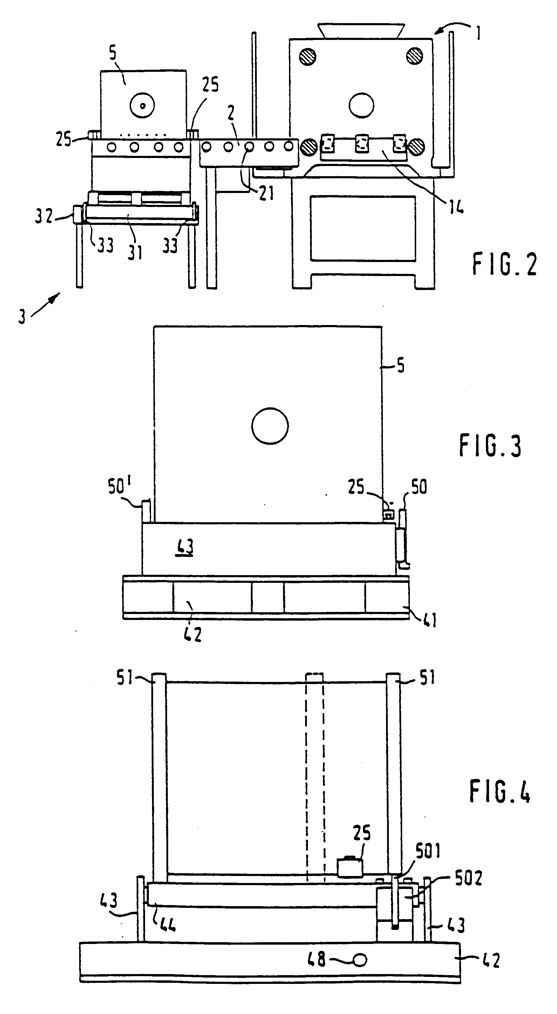

Weitere Vorteile und Merkmale der vorliegenden Erfindung ergeben sich aus der nachfolgenden Beschreibung bevorugter Ausführungsbeispiele anhand der beiliegenden Zeichnungen sowie aus weiteren Unteransprüchen. In den Zeichnungen zeigen:
Fig. 1 eine rein schematische Draufsicht auf eine Spritzgießanlage nach der Erfindung;
Fig. 2 einen Querschnitt längs der Linie II-II in Fig. 1;
Fig. 3 bis 5 Stirnansicht, Seitenansicht und Draufsicht der Gießwerkzeugkassette in vergrösserter, deutlicherer Darstellung;
Fig. 6 eine Draufsicht in vergrössertem Maßstab auf die Übergabevorrichtung;
Fig. 7 eine Detaildarstellung eines an dem Gießwerkzeug vorgesehenen Hakenelements;
Fig. 8 eine Detaildarstellung, teilweise geschnitten, eines Kettenantriebsrades der Übergabevorrichtung;
Fig. 9 eine Detaildarstellung eines Sicherungsanschlages an einer Gießwerkzeugkassette, und
Fig. 10 ein Anordnungsschema einer Spritzgießmaschine mit Stetigförderer als Transportvorrichtung, aus dem die Beschickung des Stetigförderers hervorgeht,
Gemaß der Darstellung in den Fig. 1 und 2 setzt sich das gezeigte Ausführungsbeispiel einer erfindungsgemässen Spritzgießmaschinenanlage aus einer im Ganzen mit 1 bezeichneten Spritzgießmaschine, einer an dieser angeordneten Übergabevorrichtung 2 und einer Transportvorrichtung 3 zusammen. Die Spritzgießmaschine 1 weist eine Spritzeinheit 11, Aufspannplatten 12, 13 mit einer Konsole 14 zur Aufnahme des Gießwerkzeuges (z.B. nach der DE-OS 35 01 000) sowie eine Schließeinheit 15 auf. Da mit Ausnahme der Anordnung der Übergabevorrichtung 2 an der Spritzgießmaschine diese von herkömmlicher Gestaltung sein kann, bedarf es an dieser Stelle keiner nähergehenden Erläuterungen zu Aufbau und Funktion der Spritzgießmaschine.

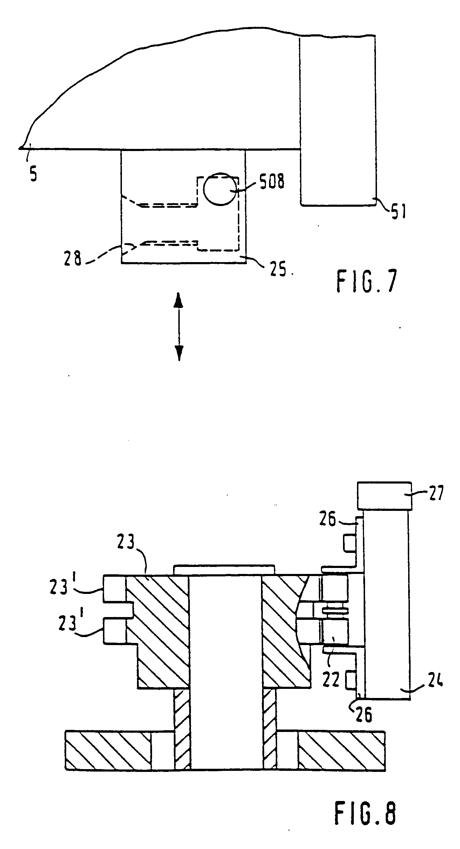

Die Übergabevorrichtung 2 und Einzelheiten davon sind aus den Fig. 1, 6 und 8 ersichtlich. Die Übergabevorrichtung 2 ist fest an der Spritzgießmaschine 1 angeordnet und weist ein Rollendeck 21 sowie eine diesem zugeordnete endlose Zugkette 22 mit zwei Kettenantriebsrädern 23 auf. Beide Trume der Zugkette 22 liegen angenähert in ein und derselben Horizontalebene; in dem gezeigten Ausführungsbeispiel handelt es sich um eine Doppelrollen-Kette, in deren Glieder jeweils eine Verzahnung der mit einer Doppelverzähnung 23' ausgestatteten Kettenantriebsräder 23 eingreift. Eines der beiden Kettenantriesbsräder 23 ist durch einen nicht gezeigten Kettenantriebsmotor angetrieben, der durch das Hauptprogramm der Spritzgießmaschinenanlage in einer Weise gesteuert wird, die aus der nachfolgenden Funktionsbeschreibung deutlich wird. An der Zugkette 22 sind in einem Abstand, dessen Bedeutung später noch erläutert wird und der im gezeigten Ausführungsbeispiel genau der halben Länge der Zugkette 22 entspricht, zwei vertikal hochstehende Eingreifstifte 24 angeordnet, die in Hakenelemente 25 des Gießwerkzeuges 5 eingreifen können. Die Eingreifstifte 24 sind von zylindrischer Gestalt, über Winkel 26 mit der Oberseite bzw. Unterseite eines Kettengliedes der Zugkette 22 verschraubt und weisen an ihren oberen Ende einen Kopf 27 von grösserem Durchmesser auf. Das an dem Gießwerkzeug 5 befestigte Hakenelement (s. Fig. 7) weist auf seiner Unterseite eine Eingriffsnut 28 mit einer erweiterten Eintrittsmünden auf, deren Querschnitt T-förmig ist, so daß der Kopf 27 der Eingreifstifte 24 darin einfahren kann und gegen ein Herausziehen nach unten gesichert ist. Das geschlossene Ende der Eingriffsnut 28 bildet eine Erweiterung, die zur Verrastung des Kopfes 27 in dessen eingefügtem Zustand beim Herein- oder Herausbewegen des Gießwerkzeuges 5 (s. Doppelpfeil in Fig. 7) dient.

Die Übergabevorrichtung 2 ist im übrigen bekannt und bedarf deshalb im Hinblick auf ihren weiteren Aufbau und ihre Funktionsweise hier keiner näheren Erläuterung.

Die Transportvorrichtung 3 ist ein handelsüblicher Rollenförderer mit zueinander parallel angeordneten Tragrollen 31, die in einem Gestell 32 gelagert und durch eine nicht gezeigte umlaufende Kette um ihre Längsachsen in Drehung versetzbar sind. Die Tragrollen 31 besitzen im Bereich ihrer beiden Enden jeweils Bunde 33, die einen Abstand von 800 mm entsprechend dem Breitenmaß der Europalette voneinander aufweisen. Diese Bunde 33, deren einander zugewendete seitliche Flanken konisch in den zylindrischen Tragröllenumfang übergehen können, dienen zur seitlichen Führung einer Werkzeugkassette 4, die in den Fig. 3 bis 5 näher dargestellt ist. Die Werkzeugkassette 4 trägt das Gießwerkzeug 5, das aus zwei Werkzeughälften besteht. Die Werkzeughälften weisen an ihrer Rückseite jeweils eine Adapterplatte 51 auf, deren Abmessungen für alle Gießwerkzeuge 5 unabhängig von deren Höhe und Art gleich sind (vgl. wieder DE-OS 35 01 000). Über die nach unten vorstehenden Ränder der Adapterplatten 51 stützt sich das Gießwerkzeug 5 auf der Werkzeugkassette 4 ab.

Die Kassette 4 besteht aus einer durch Längsstäbe 41 versteiften Grundplatte 42, die in der Nähe ihrer vorderen und hinteren Stirnseite Lagerplatten 43 für drehbar gelagerte Walzen oder Rollen 44 trägt. Die Rollen 44 bilden ein Rollendeck, das durch zwei senkrecht zu den Rollenlängsachsen und parallel zueinander verlaufende Führungsschienen 45 in zwei Deckabschnitte unterschiedlicher Breite unterteilt ist. Der in seiner Breite etwa auf die Dicke der Werkzeug-Adapterplatte 51 abgestimmte hintere Rollendeckabschnitt 46 dient als Führungspur für die Adapterplatte 51. Auf dem breiteren vorderen Rolendeckabschnitt 47 stützt sich die vordere Adapterplatte 51ab. Die Breite dieses Rollendeckabschnitts 47 ermöglicht die Abstützung von Gießwerkzeugen 5 mit unterschiedlicher Werkzeughöhe; in Fig. 4 ist die Adapterplatte eines verhältnismässig niedrigen Werkzeuges gestrichelt angedeutet (vgl. hierzu DE-OS 32 20 911).

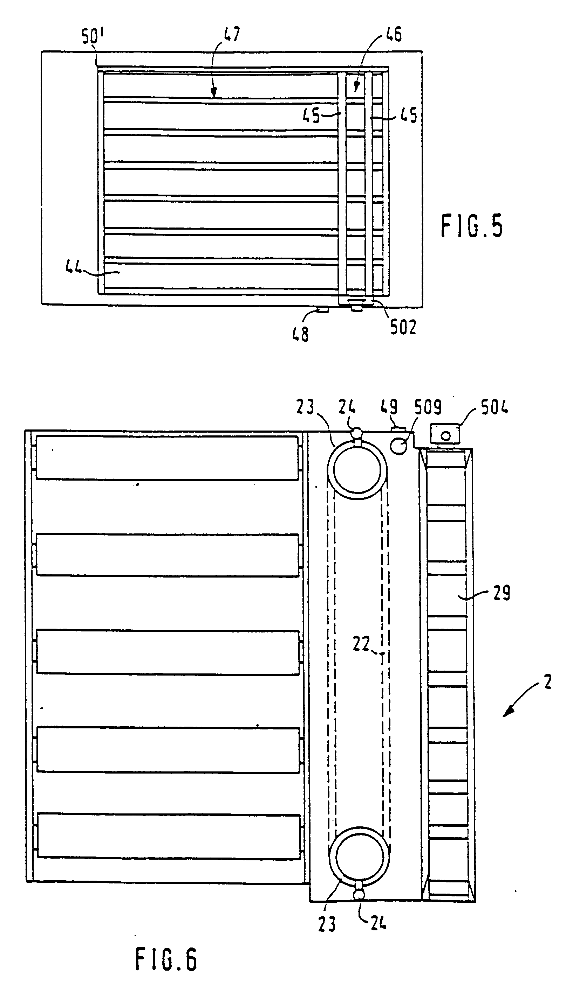

An der der Spritzgießmaschine 1 zugewendeten Seite trägt die Kassette 4 einen Induktivgeber 48, der mit einem entsprechenden Induktivaufnehmer 49 an der Übergabevorrichtung 2 zusammenwirken kann (s. Fig. 6). Der Geber 48 und der Aufnehmer 49 bilden zusammen eine Positioniereinrichtung, deren Signale von der nicht gezeigten Steuereinrichtung der Spritzgießmaschinenanlage in dem Sinne verarbeitet werden, daß bei einer gegenseitigen Ausrichtung der beiden Positionierelemente 48, 49 der Antrieb des Rollenförderers 3 zum Stillstand gebracht wird. Auf der der Spritzgießmaschine 1 zugewendeten Seite des schmalen Rollendeckabschnitts 46, der als Führungspur für die eine Adapterplatte 51 dient, ist eine im Ganzen mit 50 bezeichnete Sicherungseinrichtung angeordnet, die dazu dient, ein Herunterrutschen des Gießwerkzeuges 5 von der Werkzeugkassette 4 auf dieser Seite während des Transports zu verhindern. Die Sicherungseinrichtung 50 weist einen Sicherungsbolzen 501 auf, der in einer Schwalbenschwanzführung 502 verschiebbar geführt ist. Die Schwalbenschwanzführung 502 ist an einer mit dem Stirnseiten der Lagerplatten 43 verbundenen Wand befestigt. Durch eine nicht gezeigte Feder ist der Sicherungsbolzen 501 in der nach oben ausgefahrenen Stellung gehalten, in der er über der Ebene des Rollendeckabschnitts 46 liegt und damit ein Herausfahren des Gießwerkzeuges 5 blockiert. Wie später noch erläutert wird, kann der Sicherungsbolzen 50 gesteuert nach unten gezogen werden, um den Rollendeckabschnitt 46 freizugeben und das Gießwerkzeug 5 durch die Übergabevorrichtung 2 von dem Rollendeck 46, 47 herunterziehen zu können. Auf der gegenüberliegenden Seite sind die Rollendeckabschnitte 46, 47 durch eine feste Anschlagplatte 50' gesichert.

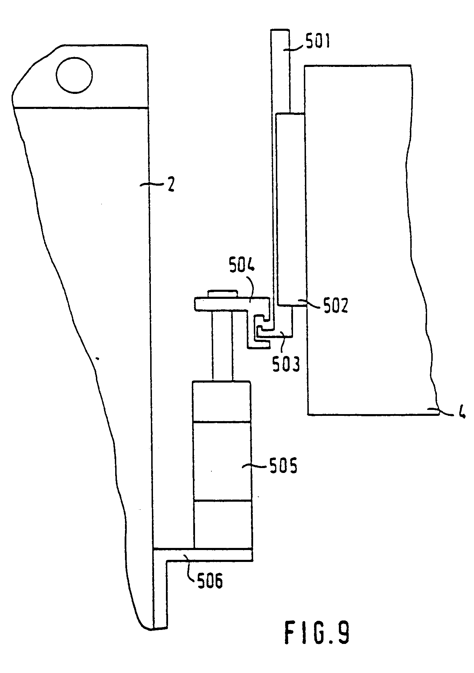

Wie aus Fig. 9 im einzelnen hervorgeht, ist der Sicherungsbolzen 501 auf seiner Unterseite zu einem Haken 503 gestaltet, der im Verlauf der Förderbewegung der Werkzeugkassette 4 auf der Transportvorrichtung 3 in das seitlich offene Hakenmaul eines Druckschuhes 504 am Ende der Kolbenstange eines Pneumatikzylinders 505 einfahren kann. Wie später noch erläutert wird, dient der Druckschuh 504, betätigt durch den Pneumatikzylinder 505 und gesteuert durch die Steuereinrichtung der Spritzgießmaschinenanlage, zum Herunterdrücken des Hakens 503 und damit zur Verschiebung des Sicherungsbolzens 501 aus dessen Blockierstellung in eine Freigabestellung, in der der Rollendeckabschnitt 46 freigegeben ist. Zugleich hintergreift der Druckschuh 504 in seiner unteren Lage den Haken 503 und koppelt auf diese Weise die Werkzeugkassette 4 formschlüssig an die Übergabevorrichtung 2, an der der Pneumatikzylinder 505 über eine Konsole 506 befestigt ist.

An dem Hakenelement 25 des Gießwerkzeuges 5 und an der der Transportvorrichtung 3 zugewendeten Seite der Übergabevorrichtung 2 können außerdem Codeträger 508, 509 vorgesehen sein, die anhand von beispielsweise festgespeicherten Informationen eine Prüfung daraufhin gestatten, ob das von der Kassette 4 herangeförderte Gießwerkzeug 5 dem in der Spritzgießmaschine 1 vorgesehenen Ablaufprogramm entspricht. Diese Überprüfung erfolgt ebenfalls anhand des Hauptprogramms in der Steuereinrichtung der Spritzgießmaschinenanlage. Die Codeträger 508, 509 liefern diese Information in dem Augenblick, in dem sie beim Heranfördern des Gießwerkzeuges 5 miteinander zur Deckung gelangen und sich dadurch gegenseitig, z.B. magnetisch, beeinflussen. Handelt es sich nicht um das vorgesehene Gießwerkzeug 5, so blockiert das Hauptprogramm der Spritzgießmaschinenanlage die Übergabe des Gießwerkzeuges und löst beispielsweise einen Alarm aus.

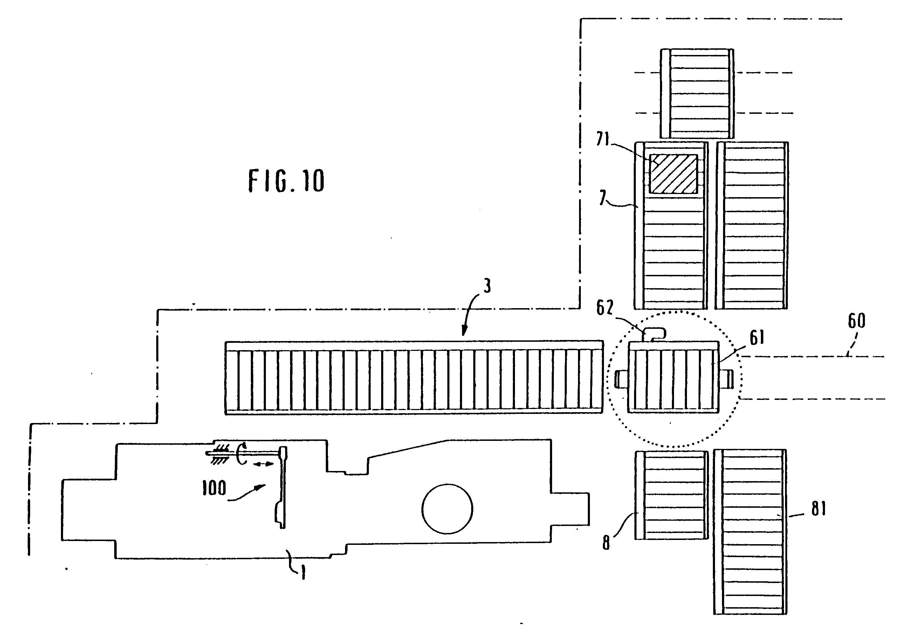

Die Fig. 10 zeigt prinzipiell die Verknüpfung der Transportvorrichtung 3 der erfindungsgemässen Spritzgießanlage mit dem weiteren Transportsystem des Betriebes. So endet an dem einen Ende der Transportvorrichtung 3 eine Schienenbahn 60, auf der ein Wagen mit einem daraufin einer Horizontalebene drehbar gelagerten Rollendeck 61 verfahrbar ist. Die Rollen des Rollendecks 61 können durch einen nur angedeuteten Antrieb 62 in beiden Drehrichtungen um ihre Längsachsen angetrieben werden. Je nach der Drehstellung des Rollendecks 61 ist dieses entweder zu der Transportvorrichtung 3 oder zu zwei weiteren Rollenbahnen 7 und 8 ausgerichtet. Die Rollenbahn 7 ist Teil eines Transportsystems für Teilebehälter 71, die zur Aufnahme fertiger Spritzgießteile dienen, und steht mit einem Lager für die Teilebehälter 71 und/oder einer Versandstelle in Verbindung. Die Rollenbahn 8 dient zur Aufnahme von Gießwerkzeugen 5 und befindet sich im Bereich einer nicht näher dargestellten Vorwärmstation, in der die Gießwerkzeuge 5 vor ihrem Einsatz an der Spritzgießmaschine 1 vortemperiert werden. Eine zu der Rollenbahn 8 parallele weitere Rolenbahn 81 führt beispielsweise zu einem nicht gezeigten Werkzeuglager für die Gießwerkzeuge 5.

Die Wirkungsweise der in den Fig. 1 bis 9 dargestellten erfindungsgemässen Spritzgießanlage wird unter Einbeziehung der in Fig. 10 dargestellten Verknüfpung mit dem weiteren Transportsystem des Betriebes nachfolgend erläutert:
Es sei angenommen, daß sich in der Spritzgießmaschine 1 noch kein Gießwerkzeug 5 befindet, jedoch durch den Rollendeck-Wagen 61 aus dem nicht gezeigten Werkzeuglager über die Rollenbahn 81 ein Gießwerkzeug 5 in die Vorwärmstation verbracht worden ist, das nunmehr auf der Rollenbahn 8 steht. Das Gießwerkzeug 5 befindet sich dabei bereits auf einer Werkzeugkassette 4. Durch die Gesamtsteuerung der Spritzgießanlage gesteuert, fährt der Rollendeck-Wagen 61 auf der Schienenbahn 60 zunächst in die aus Fig. 10 ersichtliche Position, schwenkt daraufhin das Rollendeck 61 um 90°, so daß es mit der Rollenbahn 8 fluchtet und übernimmt auf nicht näher gezeigte Weise die Werkzeugkassette 4 mit dem darauf befindlichen Gießwerkzeug 5 von der Rollenbahn 8. Die Übergabe kann durch eine nicht gezeigte Schiebevorrichtung erfolgen, die der Rollenbahn 8 zugeordnet ist. Nach erneuter Drehung des Rollendecks 61 um 90° bis zur Ausrichtung mit der Transportvorrichtung 3 wird das Rollendeck 61 durch den Antrieb 62 angetrieben, so daß die darauf stehende Werkzeugkassette 4 an die Transportvorrichtung 3 übergeben wird. Spätestens zu diesem Zeitpunkt schaltet auch der nicht gezeigte Antrieb für die Transportvorrichtung ein, so daß die Tragrollen 31 angetrieben werden und die Werkzeugkassette 4 zur Spritzgießmaschine 1 hin fördern. Zunächst wird die Transportvorrichtung 3 rasch angetrieben, jedoch zu dem Zeitpunkt, an dem die Induktivelemente 48, 49 der Positioniereinrichtung sich einander nähern, auf Schleichgang umgeschaltet. Diese langsame Bewegung der Transportvorrichtung 3 setzt sich solange fort, bis durch Steuerung der Positioniereinrichtung 48, 49 der als Führungsspur dienende Rollendeckabschnitt 46 der Werkzeugkassette 4 mit einer Genauigkeit von etwa ± 5 mm gegenüber der entsprechenden Führungsspur 29 und damit gegenüber der Konsole 14 der Werkzeugaufspannplatte 13 ausgerichtet ist. Zu diesem Zeitpunkt hat auch der der Transportvorrichtung 3 zugewendete Eingreifstift 24, der sich zu dieser Zeit am äußersten Punkt der Zugkette 22 und des Kettenrades 23 befindet, in das Hakenelement 25 des Gießwerkzeuges 5 eingegriffen und der Haken 503 des Sicherungsbolzens 501 ist in das Maul des Druckschuhes 504 eingefahren. Durch ein entsprechendes Signal, das z.B. von den Positionierelementen 46, 49 bei deren Übereinstimmung abgegeben werden kann, wird nunmehr der Pneumatikzylinder 505 betätigt, so daß der Druckschuh 504 den Sicherungsbolzen 501 nach unten bewegt und außerdem eine formschlüssige Koppelung zwischen dem Haken 503 und dem Druckschuh 504 zustande kommte, durch die die Werkzeugkassette 4 an der Übergabevorrichtung 2 festgelegt wird. Nunmehr, weiterhin gesteuert von der Steuetungsvorrichtung der Spritzgießanlage, tritt die Übergabevorrichtung 2 in Tätigkeit, d.h. die Kettenräder 23 werden durch deren nicht gezeigten Antriebsmotor angetrieben. Da sich der äußerste Eingreifstift 24 in Eingriff mit der Nut 28 des Hakenelements 25 befindet und im Lauf seiner Bewegung in deren rückwärtige Erweiterung gelangt, wird durch die Betätigung der Zugkette 22 das Gießwerkzeug 5 auf die Rollenbahn 21, 29 der Übergabevorrichtung 2 gezogen. Der Abstand der beiden Eingreifstifte 24 voneinander auf der Zugkette 22 entspricht genau dem Abstand der Nuten 28 in den Hakenelementen 25, die an den gegenüberliegenden Seiten des Gießwerkzeugs 5 angebracht sind. Diese Hakenelemente 25 liegen einander auch bezüglich der parallel zur Förderrichtung der Transportvorrichtung 3 gedachten Mittellinie des Gießwerkzeuges 5 genau gegenüber und ihre Eingreifnuten 28 sind, ohne daß das aus der zeichnerischen Darstellung deutlich hervorgeht, so tief gelegt, daß der sich noch nicht mit dem Hakenelemente 25 in Eingriff befindende Eingreifstift 24 sich unter dem Gießwerkzeug 5 hindurchbewegen kann. Aufgrund der geschilderten Anordnung kommt dieser weitere Eingreifstift schließlich mit dem an der Rückseite des Gießwerkzeuges 5 angeordneten weiteren Hakenelement 25 in Eingriff. Zu diesem Zeitpunkt befindet sich das Gießwerkzeug 5 voll auf dem Rollendeck 21, 29 der Übergabevorrichtung 2. Durch einen nunmehr anschließenden weiteren Umlauf der Zugkette 22, in dessen Verlauf der mit dem ersten Hakenelemente 25 zunächst in Eingriff befindliche Eingreifstift 24 sich daraus wieder löst, wird des Gießwerkzeug 5 auf die Konsolen 14 der Werkzeugaufspannplatten 12, 13 aufgeschoben. Durch eine kurze Weiterbewegung der Zugkette 22 wird der Eingreifstift 24 aus dem Eingriff mit dem Hakenelement 25 zunächst freigegeben und dann nach der Fixierung und Positionierung des Gießwerkzeuges an den Werkzeugaufspannplatten 12, 13 wieder in die Lage verbracht, die aus Fig. 6 zu ersehen ist, in der er außer Eingriff mit dem Hakenelement 25 ist. Die Fixierung des Gießwerkzeuges 5 an den Werkzeugaufspannplatten 12, 13 erfolgt in bekannter Weise (vgl. hierzu z.B. DE-OS 35 01 000).

Nach dem Einbringen des Gießwerkzeuges 5 in die Spritzgießmaschine 1 fährt durch Umsteuerung der Transportvorrichtung 3 die nunmehr leere Werkzeugkassette wieder zurück und verlässt die Transportvorrichtung 3 über den Rollendeck-Wagen 61, der sie ggf. an die Rollenbahn 81 übergibt, so daß sie von dort zum nicht gezeigten Werkzeugspeicher zurückgebracht werden kann. Nunmehr wird über die Rollenbahn 7 ein Teilebehälter 71 in entsprechender Weise über den Rollendeck-Wagen auf die Transportvorrichtung 3 gebracht und von dieser an eine Stelle vor der Spritzgießmaschine 1 bewegt, an der er sich im Übergabebereich eines in Fig. 10 nur schematisch angedeuteten Manipulators 100 befindet Aufbau und Wirkungsweise eines solchen Manipulators sind an sich bekannt und bedürfen hier keiner Erläuterung. Nach dem Einsetzen der Arbeitszyklen der Spritzgießmaschine 1 können durch den Manipulator 100 fertige Spritzgießteile in den Teilebehälter 71 hinein abgelegt werden. Je nach dem Produktionsumfang können mehrmals gefüllte Teilebehälter 71 von der Spritzgießmaschine 1 weg und leere Teilebehälter 71 zu dieser hin gefördert werden. Ist die Produktion beendet und der letzte Teilebehälter 71 abtransportiert, so wird gesteuert eine leere Werkzeugkassette 4, z.B. wieder aus dem nicht gezeigten Werkzeugspeicher, in gleicher Weise wie oben beschrieben zur Spritzgießmaschine 1 verbracht und dort positioniert. Das in der Spritzgießmaschine 1 befindliche Gießwerkzeug 5 wird nunmehr in umgekehrter. Vorgangsweise durch die Übergabevorrichtung 2 aus der Spritzgießmaschine 1 herausgezogen und auf die leere Werkzeugkassette 4 geschoben. Nachdem die Werkzeugkassette 4 mit dem zuletzt benutzten Gießwerkzeug 5 die Transportvorrichtung 3 verlassen hat, kann eine in der Zwischenzeit in der Vorwärmstation auf der Rollenbahn 8 befindliche neue Werkzeugkassette 4 mit einem darauf befindlichen Gießwerkzeug 5 in gleicher Weise zur Spritzgießmaschine 1 hin verbracht werden, um das Gießwerkzeug 5 in der Spritzgießmaschine zu montieren. Die nunmehr wieder leere Werkzeugkassette 4 wird erneut abtransportiert und ein Teilebehälter 71 an ihre Stelle an der Spritzgießmaschine 1 verbracht. Nunmehr kann die Produktion mit dem neuen Gießwerkzeug 5 fortgesetzt werden.

Es versteht sich, daR die Verknüpfung der der Spritzgießmaschine 1 zugeordneten Transportvorrichtung 3 mit dem weiteren Transportsystem des Betriebes auf beliebige Weise und abweichend von der Darstellung in Fig. 10 erfolgen kann. So kann beispielsweise an die Stelle des Rollendeck-Wagens 61 eine Krananlage oder ein Gabelstapler od. dgl. treten, durch die die Transportvorrichtung 3 beschickt bzw. entsorgt wird. Weiterhin versteht sich, daß einzelne Funktionselemente der geschilderten Ausführungsbeispiele durch andere Elemente ersetzt werden können, die entsprechende Funktion haben. So ist beispielsweise anstelle der Induktiv-Positioniereinrichtung 48, 49 auch eine Lichtschranke oder eine auf mechanischen Kontakt ansprechende Endschalter-Kombination einsetztbar. Der Pneumatikzylinder 505 kann entsprechend durch andere Betätigungseinrichtungen für den Druckschuh 504 ersetzt sein, z.B. durch einen Hydraulikzylinder oder einen Elektromagnet. Schließlich kann anstelle einer den Sicherungsbolzen 501 in der Blockierstellung haltenden Feder der Sicherungsbolzen 501 so streng in der Schwalbenschwanzführung 502 geführt sein, daß er selbstättig seine einmal eingenommene Lage einhält, und anstelle eines Sicherungsbolzens kann auch ein die Breite der Rollendeckabschnitte 46, 47 ganz erfassender Sicherungsbügel vorgesehen sein.

## Patentansprüche

1. Spritzgießanlage mit mindestens einer Spritzgießmaschine, mit einer Einrichtung zum Wechseln des Gießwerkzeuges der Spritzgießmaschine, die eine Transportvorrichtung zur Beförderung des Gießwerkzeuges längs einer bestimmten Förderbahn zur Spritzgießmaschine hin und von dieser weg sowie eine Übergabevorrichtung zur Übergabe des Gießwerkzeuges von der Transportvorrichtung an die Spritzgießmaschine und umgekehrt umfaßt, mit einem Manipulator zur Entnahme fertiger Spritzgießteile aus der Spritzgießmaschine und zu deren Ablegen in einen Teilebehälter und mit einer dem Manipulator zugeordneten Transportvorrichtung zum Befördern des Teilebehälters längs einer Förderbahn von der Spritzgießmaschine weg und zu dieser hin, dadurch gekennzeichnet, daß die Übergabevorrichtung (2) an der Spritzgießmaschine (1) angeordnet ist und daß die Transportvorrichtung (3) zum Befördern des Teilebehälters (71) im Bereich der Spritzgießmaschine (1) zugleich als Transportvorrichtung zur Beförderung das Gießwerkzeuges (5) ausgebildet und ein Stetigförderer ist, auf dem zur Halterung des Gießwerkzeuges (5) eine Kassette (4) vorgesehen ist.

2. Spritzgießanlage nach Anspruch 1, dadurch gekennzeichnet, daß der Stetigförderer eine angetriebene Rollenbahn ist.

3. Spritzgießanlage nach Anspruch 1 oder 2, dadurch gekennzeichnet, daß Form und Abmessungen der Kassette (4) zur Halterung des Gießwerkzeuges (5) mit denjenigen des Teilebehälters (71) übereinstimmen.

4. Spritzgießanlage nach einem der Ansprüche 1 bis 3, dadurch gekennzeichnet, daß der Stetigförderer in seiner Breite auf die Kassette (4) abgestimmt ist.

5. Spritzgießanlage nach einem der Ansprüche 2 bis 4, dadurch gekennzeichnet daß die Kassette (4) zur Halterung des Gießwerkzeuges (5) auf ihrer Oberseite eine Führungsfläche oder Rollenbahn (44) zum Verschieben des Gießwerkzeuges (5) in den Werkzeugraum der Spritzgießmaschine (1) aufweist

6. Spritzgießanlage nach einem der Ansprüche 2 bis 5, bei der an der Spritzgießmaschine und an der Transportvorrichtung für das Gießwerkzeug Positionierelemente zur gesteuerten Positionierung des Gießwerkzeuges relativ zur Spritzgießmaschine angeordnet sind, dadurch gekennzeichnet, daß die der Transportvorrichtung (3) zugeordneten Positionierelemente (48) an der Kassette (4) angeordnet sind und auf die Antriebssteuerung des Stetigförderers (3) wirken.

## Claims

1. An injection moulding installation comprising at least one injection moulding machine, a device for changing the moulding tool of the injection moulding machine, which includes a transport device for conveying the moulding tool along a given conveyor path towards and away from the injection moulding machine and a transfer device for transfer of the moulding tool from the transport device to the injection moulding machine and vice-versa, a manipulator for removing finished injection moulded parts from the injection moulding machine and for depositing them in a parts container, and a transport device associated with the manipulator for conveying the parts container along a conveyor path away from the injection moulding machine and towards same,
characterised in that the transfer device (2) is arranged at the injection moulding machine (1) and that the transport device (3) for conveying the parts container (71) in the region of the injection moulding machine (1) is at the same time constructed as the transport device for conveying the moulding tool (5), and is a continuous conveyor on which a cassette (4) is provided for holding the moulding tool (5).

2. An injection moulding installation according to Claim 1 characterised in that the continuous conveyor is a driven roller track.

3. An injection moulding installation according to Claim 1 or Claim 2 characterised in that the form and dimensions of the cassette (4) for holding the moulding tool (5) are the same as those of the parts container (71).

4. An injection moulding installation according to one of Claims 1 to 3 characterised in that the width of the continuous conveyor is matched to that of the cassette (4).

5. An injection moulding installation according to one of Claims 2 to 4 characterized in that, for holding the moulding tool (5) the cassette (4) is provided on its top side with a guide surface or roller track (44) for displacement of the moulding tool (5) into the tool space of the injection moulding machine (1).

6. An injection moulding installation according to one of Claims 2 to 5 wherein arranged on the injection moulding machine and the transport device for the moulding tool are positioning elements for the controlled positioning of the moulding tool relative to the injection moulding machine characterised in that the positioning elements (48) associated with the transport device (3) are arranged on the cassette (4) and act on the drive control for the continuous conveyor (3).

## Revendications

1. Installation de moulage par injection, comprenant au moins une machine de moulage par injection, un dispositif de changement de l'outil de moulage de la machine de moulage par injection, qui comporte un dispositif de transport destiné à acheminer l'outil de moulage le long d'une voie de transport déterminée vers la machine de moulage par injection et au loin de cette dernière, ainsi qu'un dispositif de transfert pour transférer l'outil de moulage du dispositif de transport à la machine de moulage par injection et inversement, un manipulateur pour prélever les pièces de moulage finies depuis la machine de moulage par injection et pour les déposer dans un récipient à pièces, et un dispositif de transport associé au manipulateur pour acheminer le récipient à pièces le long d'une voie de transport au loin de la machine de moulage par injection et vers celle-ci,
caractérisée en ce que le dispositif de transfert (2) est agencé sur la machine de moulage par injection (1), et en ce que le dispositif de transport (3) pour acheminer le récipient à pièces (71) dans la zone de la machine de moulage par injection (1) est réalisé en même temps comme dispositif de transport pour acheminer l'outil de moulage (5), et est un transporteur continu sur lequel il est prévu un caisson (4) pour le maintien de l'outil de moulage (5).

2. Installation de moulage par injection selon la revendication 1,
caractérisée en ce que le transporteur continu est une voie à rouleaux entraînée.

3. Installation de moulage par injection selon la revendication 1 ou 2,
caractérisée en ce que la forme et les dimensions du caisson (4) pour maintenir l'outil de moulage (5) correspondent à celles du récipient à pièces (71).

4. Installation de moulage par injection selon une des revendications 1 à 3,
caractérisée en ce que le transporteur continu est accordé en largeur au caisson (4).

5. Installation de moulage par injection selon une des revendications 2 à 4,
caractérisée en ce que le caisson (4) pour maintenir l'outil de moulage (5) présente, sur son dessus, une surface de guidage ou une voie à rouleaux (44) pour déplacer l'outil de moulage (5) dans l'espace d'outil de la machine de moulage par injection (1).

6. Installation de moulage par injection selon une des revendications 2 à 5, dans laquelle des éléments de positionnement prévus pour positionner de façon commandée l'outil de moulage par rapport à la machine de moulage par injection sont agencés sur la machine de moulage par injection et sur le dispositif de transport pour l'outil de moulage,
caractérisée en ce que les éléments de positionnement (48) associés au dispositif de transport (3) sont agencés sur le caisson (4) et agissent sur la commande d'entraînement du transporteur continu (3).
